# FASCICULE DE BREVET EUROPEEN

(11) **EP 1 115 646 B1**
(45) Date de publication et mention de la délivrance du brevet: **31.10.2007**
(21) Numéro de dépôt: 00958601.7
(22) Date de dépôt: 24.07.2000
(51) Int. Cl.: B67C 3/28

(54) **VANNE A BILLE AVEC FENTE POUR DEBIT PERMANENT**
KUGELVENTIL MIT SCHLITZ FÜR PERMANENTEN DURCHFLUSS
SLOTTED BALL VALVE FOR CONTINUOUS FLOW

(30) Priorité: 03.08.1999 FR 9910161
(43) Date de publication de la demande: 18.07.2001
(73) Titulaire: SIDEL PARTICIPATIONS, 76930 Octeville-sur-Mer (FR)
(72) Inventeur: ADRIANSENS, Eric, 76053 Le Havre Cedex (FR)
(74) Mandataire: Siloret, Patrick
(86) Numéro de dépôt international: PCT/FR2000/002126
(87) Numéro de publication internationale: WO 2001/009028

(56) Documents cités:
- CH-A- 626 972
- DE-B- 2 321 206
- GB-A- 447 359
- US-A- 3 665 907
- US-A- 4 511 118
- US-A- 5 492 449
- US-A- 5 878 992

## Description

L'invention se rapporte au domaine de dispositifs aptes à commander le débit d'un fluide dans un circuit, et notamment à ces dispositifs destinés à être utilisés dans des installations de remplissage de récipients.

Dans les machines de remplissage de récipients, il est intéressant de pouvoir disposer de plusieurs débits de fluide, notamment pour pouvoir accélérer le remplissage en dépit du phénomène de création de mousse. En effet, lorsque le débit de remplissage est important, ce qui permet de remplir rapidement un volume donné de produit, on observe immanquablement l'apparition de mousse. Cela se révèle particulièrement gênant en fin de remplissage car la mousse conduit a un débordement du produit, ce qui entraîne non seulement une perte de produit mais surtout une incertitude quant à la quantité de produit qui est effectivement contenue dans le récipient en fin de remplissage. Bien entendu, la formation de mousse est beaucoup moins importante si l'on réduit le débit de remplissage, mais on augmente alors la durée de celui-ci.

Ainsi, il est apparu particulièrement intéressant de remplir le récipient en deux phases. Dans une première phase, on privilégie la rapidité de remplissage en utilisant un gros débit de fluide, sans se soucier du problème de moussage du produit. Dans une seconde phase, on utilise un débit moindre pour permettre à la mousse éventuellement créée au cours de la première phase de se résorber et pour arriver au niveau souhaité de remplissage, soit en termes de poids de produit, soit en termes de volume ou de hauteur de remplissage, avec le plus de précision possible.

Or, comme divulgué par le document DE 2 246 176 A, un tel procédé de remplissage nécessite l'utilisation de moyens de vannage capables de déterminer au moins deux débits différents de fluide dans le circuit.

Une solution possible consiste à utiliser une vanne proportionnelle que l'on peut commander pour déterminer d'abord un premier débit, puis un second débit. Cependant, comparée à l'électronique de commande d'une vanne commandée en "tout ou rien", celle d'une vanne proportionnelle est relativement complexe et donc coûteuse. Or la plupart des machines de remplissage sont des machines comportant un nombre important de postes de remplissage dont chacun doit être muni de ses propres moyens de vannage. Ainsi, sur des machines comportant plusieurs dizaines de postes, voire une centaine de postes, l'utilisation de vannes proportionnelles n'est pas intéressante en termes économiques.

L'invention a donc pour premier objet de proposer un dispositif de commande d'un débit de fluide capable de déterminer deux niveaux de débit, le dispositif devant être simple dans sa construction et simple dans son fonctionnement.

Dans ce but, l'invention propose un dispositif de commande d'un débit de fluide, du type comportant des moyens de vannage qui sont pourvus d'un seuil au travers duquel circule le fluide, et d'un obturateur mobile qui se déplace dans la chambre entre une position d'appui, dans laquelle il est en appui sur le siège pour interrompre le passage de fluide au travers du seuil, et une position d'ouverture dans laquelle l'obturateur est écarté de son siège pour autoriser le passage du fluide au travers du seuil, caractérisé en ce que le dispositif comporte des seconds moyens de vannage qui sont interposés dans le circuit en série avec les premiers moyens de vannage, et dans lesquels un second obturateur mobile se déplace entre une position d'appui, dans laquelle il est en appui sur le siège d'un second seuil, et une position d'ouverture dans laquelle le second obturateur est écarté du second siège pour autoriser le passage du fluide au travers du second seuil, et en ce que, en position d'appui, le second obturateur autorise le passage d'un débit réduit de fluide au travers du second seuil.

Selon d'autres caractéristiques de l'invention :
- l'un au moins des deux obturateurs se déplace entre sa position d'appui et sa position d'ouverture sous l'effet d'un champ magnétique ;
- l'obturateur se déplace verticalement entre sa position d'appui et sa position d'ouverture ;
- la position d'appui de l'obturateur correspond à sa position basse ; il est appelé et maintenu vers sa position haute d'ouverture par un électroaimant, et il regagne sa position d'appui sous l'action de son poids ;
- la position d'appui de l'obturateur correspond à sa position haute, il est appelé et maintenu vers sa position basse d'ouverture par un électroaimant, et il regagne et est maintenu dans sa position d'appui sous l'action d'un aimant permanent ;
- le fluide s'écoule dans le circuit dans le sens du déplacement de l'obturateur de sa position d'ouverture vers sa position d'appui ;
- l'obturateur est réalisé sous la forme d'une bille en matériau magnétique ;
- le siège des seconds moyens de vannage est ajouré de manière à laisser subsister une section de passage réduite pour le fluide lorsque l'obturateur est en position d'appui ; et
- les deux moyens de vannage sont agencés au sein d'un même corps de vanne.

L'invention concerne aussi une machine de remplissage de récipients, caractérisée en ce qu'elle comporte un dispositif de commande d'un débit de fluide incorporant l'une quelconque des caractéristiques précédentes.

D'autres caractéristiques et avantages de l'invention apparaîtront à la lecture de la description détaillée qui suit ainsi que dans les dessins annexés dans lesquels :
- les figures 1 à 3 sont des vues schématiques en coupe axiale d'une vanne à deux billes capable de déterminer deux débits discrets, la vanne étant respectivement représentée en position fermée, en position de petit débit et en position de grand débit ;
- la figure 4 est une vue schématique en perspective avec arrachement illustrant les seconds moyens de vannage de la vanne de la figure 1 ; et
- la figure 5 est une vue en coupe axiale d'une variante de réalisation de l'invention.

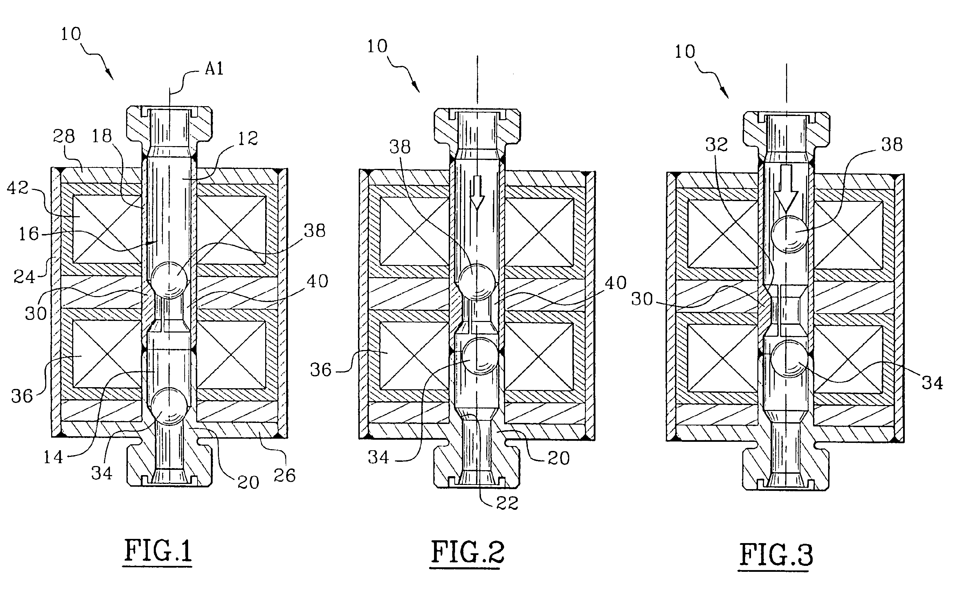

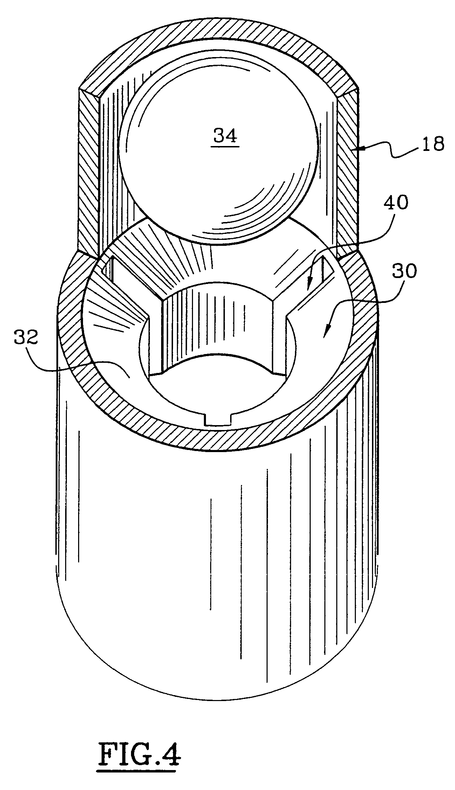

Sur les figures 1 à 4, on a représenté une vanne 10 qui destinée à être installée par exemple dans une installation de remplissage de récipients. La vanne 10 est donc destinée à être interposée dans un circuit d'alimentation entre une unité de stockage du fluide et au moins un bec de remplissage. Dans une telle machine, un récipient est amené en regard du bec et la vanne 10 est ouverte pour permettre le passage du produit. Lorsque le récipient est rempli, la vanne 10 est refermée.

Comme on le verra par la suite, la vanne 10 est particulièrement adaptée pour être utilisée dans le domaine du remplissage de liquides alimentaires.

La vanne 10 a une structure générale tubulaire. En son centre, elle comporte une chambre de commande cylindrique 16 qui est délimitée par un tube central 18 d'axe A1.

Dans l'exemple illustré aux figures 1 à 3, les extrémités supérieures et inférieures de la chambre 16 sont reliées respectivement à des tronçons amont et aval du circuit d'alimentation, le fluide étant ainsi destiné à s'écouler du haut vers le bas dans la vanne 10 qui est de préférence agencée verticalement, en tous cas dans le sens illustré sur les figures 1 à 3.

L'extrémité inférieure de la chambre 16 présente la forme d'un premier seuil 20 formé par une restriction de section. Le seuil présente ainsi une portion tronconique 22 qui est destinée à former un premier siège et qui est prolongée vers le bas par une portion cylindrique de diamètre inférieur au diamètre de la chambre 16. Dans ce premier exemple de réalisation, le premier seuil 20 est donc situé à l'extrémité aval de la vanne.

La vanne 10 comporte une chemise externe tubulaire 24 d'axe A1 qui est agencée coaxialement autour du tube 18. Le diamètre du tube 18 et de la chemise 24 sont prévus de manière qu'il existe entre les deux un espace interne tubulaire. Deux plaques transversales 26, 28 referment l'espace interne vers le bas et vers le haut.

Selon l'invention, la vanne 10 comporte un second seuil 30 qui est formé de manière similaire par une restriction de section. Le seuil 30 présente ainsi une portion tronconique 32 qui est destinée à former un second siège et qui est prolongée vers le bas par une portion cylindrique de diamètre inférieur au diamètre de la chambre 16. Dans l'exemple illustré, le second seuil 30 est situé à mi-hauteur dans la chambre 16 de sorte qu'il divise celle-ci entre une partie amont 12 et une partie aval 14.

A chacun des deux seuils 20, 30 est associé un obturateur mobile qui permet de commander le débit de fluide au travers du seuil correspondant. Dans les deux cas, il est choisi de réaliser l'obturateur sous la forme d'une bille en matériau magnétique qui est commandée par une bobine électromagnétique enroulée autour du tube 18 dans l'espace interne délimité entre le tube 18 et la chemise 24.

Ainsi, une première bille 34 est reçue dans la partie aval 14 de la chambre 16. La bille 34 présente un diamètre inférieur à celui de la chambre 16 mais supérieur à celui de la restriction de section du seuil associé 20. Sous l'effet de son seul poids, la bille 34 tombe en appui sur le siége 22 du premier seuil 20. Cet appui permet de fermer de manière étanche tout passage de fluide au travers du premier seuil 20. Une première bobine 36 est agencée dans l'espace interne au niveau de la partie aval 14 de la chambre 16. Lorsqu'elle est alimentée électriquement, la bobine 36 crée un champ électromagnétique qui attire la première bille 34 vers une position d'ouverture en la soulevant de son siège 22, rompant ainsi l'étanchéité et permettant au fluide de circuler au travers du premier seuil 20.

La première bille 34, le premier seuil 20 et la première bobine 36 forment ainsi des premiers moyens de vannage qui sont commandés en "tout ou rien" pour autoriser ou interrompre le passage du fluide.

De manière similaire, une seconde bille 38 est reçue dans la partie amont 12 de la chambre 16 de manière à venir elle aussi, sous l'effet de son seul poids, en appui sur le siège 32 du second seuil 30. De même, une seconde bobine 42 est agencée dans l'espace interne au niveau de la partie amont 12 de la chambre 16 pour, lorsqu'elle est alimentée électriquement, créer un champ électromagnétique capable d'attirer la seconde 38 vers une position d'ouverture en la soulevant de son siège 32.

Cependant, contrairement au premier seuil 20, le siège 32 du second seuil 30 est ajouré. On peut voir en effet aux figures 1 à 4 que le second seuil 30 comporte trois rainures radiales 40 qui s'étendent axialement au travers de la restriction de section formant le second seuil 30. Ces rainures 40 s'étendent chacune radialement vers l'extérieur par rapport à l'axe A1 de la vanne 10, au-delà de la ligne de contact entre la seconde bille 38 et le siège 32. Comme elles débouchent axialement vers le haut dans ce siège 32 et qu'elles débouchent également vers le bas en direction de la partie aval de la chambre 16, les rainures 40 forment un passage résiduel pour le fluide même lorsque la seconde bille 38 est en appui sur son siège 32. Ainsi, la seconde bille 38, le second seuil 30 et la seconde bobine 42 forment des seconds moyens de vannage qui déterminent un premier niveau de débit de fluide au travers du second seuil lorsque la seconde bille 38 est en position d'appui, et qui déterminent un second niveau de débit, inférieur au premier, lorsque la seconde bille 38 est en position d'appui.

Bien entendu, le siège 32 du second seuil 30 pourrait être ajouré de différentes manières.

Le fonctionnement de la vanne 10 selon l'invention est donc le suivant.

Sur la figure 1 on a illustré la vanne à l'état fermée. En effet, aucune des deux bobines 36, 42 n'est alimentée, si bien que les billes 34, 38 sont chacune en position d'appui sur leur respectif. Or, dans ce cas, les premiers moyens de vannage 20, 34 empêchent toute circulation de fluide au travers de la vanne 10.

Sur la figure 2, on peut voir que la première bobine 36 est alimentée de manière à attirer la première bille 34 vers sa position d'ouverture, tandis que la seconde bille 38 reste en position d'appui. Dans ce cas, le fluide peut librement circuler au travers du premier seuil 20 mais le débit de fluide se trouve limité par la faible section de passage qui lui est disponible au travers du second seuil 30 lorsque la seconde bille est en appui. Les deux moyens de vannage étant agencés en série dans la vanne, le débit au travers de la vanne ne peut excéder le débit résiduel au travers du second seuil 30. Ainsi, dans cet état, la vanne laisse passer un faible débit de fluide.

Lorsqu'on alimente les deux bobines 36, 42, les deux billes 34, 38 sont en position d'ouverture de sorte que le fluide peut circuler librement au travers des deux seuils 20, 30. Le débit de fluide au travers de la vanne est alors limité par la plus petite section de passage dans le tube 18, cette section minimale pouvant par exemple être la section libre autour des billes en position d'ouverture. Dans tous les cas, cette section permettra d'obtenir un second débit de fluide au travers de la vanne qui soit nettement supérieur au seul débit faible qui s'écoule dans le cas de la figure 2.

La vanne selon l'invention est donc particulièrement simple tant dans sa structure que dans son mode de commande. Il s'agit de plus d'une vanne particulièrement sûre car elle est du type normalement fermé si bien que, en cas de coupure d'alimentation, la vanne se referme et empêche ainsi tout écoulement de fluide non désiré.

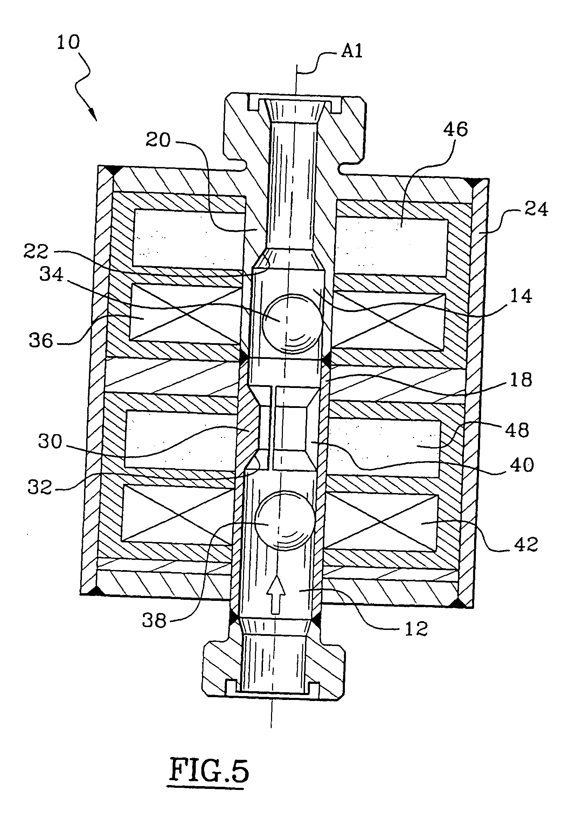

On a illustré sur la figure 5 une variante de réalisation de la vanne 10 qui est adaptée pour fonctionner "tête en bas"

En effet, cette vanne est sensiblement identique à la précédente, à ceci près qu'elle est renversée verticalement. Ainsi, le premier et le second seuils 20, 30 se situent non plus à l'extrémité inférieure, mais maintenant à l'extrémité supérieure des parties amont 12 et aval 14 de la chambre 16, sachant que le fluide est prévu pour circuler du bas vers le haut au travers de la vanne.

De la sorte, il n'est plus possible de compter sur le poids des billes pour les ramener vers leur position d'appui. Aussi, la vanne est modifiée par l'ajout de deux aimants permanents annulaires 46, 48 qui sont agencés dans l'espace interne délimité entre le tube 18 et la chemise 24 de la vanne 10. Les deux aimants sont agencés axialement sensiblement au niveau des seuils pour que chacun soit en mesure d'attirer la bille correspondante contre son siège. Les deux bobines 36, 42 sont agencés comme précédemment, en amont de l'aimant correspondant de manière à attirer les billes vers leur position d'ouverture.

Dans ce mode de réalisation, chaque aimant est prévu pour ramener la bille correspondante en appui contre son siège dès que l'on cesse d'alimenter la bobine associée. Bien entendu, une fois en appui, la bille y est maintenue par la seule action de l'aimant qui dans ce cas, doit contrer l'action de la pesanteur sur la bille. Dans cette variante aussi, la vanne est donc de type normalement fermée.

Dans les deux cas, on peut voir que la vanne est prévu pour fonctionner avec un fluide qui circule dans la vanne de telle manière que son action sur la bille tend à la ramener en appui contre son siège.

De même, dans les deux exemples de réalisation proposés, les premiers moyens de vannage, qui seuls peuvent fermer la vanne de manière étanche, sont agencés en aval des seconds moyens de vannage par rapport au sens de circulation du fluide. Cependant, on pourrait tout aussi bien prévoir le contraire.

Les vannes qui viennent d'être décrites sont des vannes dans lesquelles les deux obturateurs sont commandés électromagnétiquement à distance sans être reliés par quelque organe que ce soit à l'extérieur du circuit. Ainsi, on garantit un parfait isolement entre l'intérieur du circuit et l'extérieur, ce qui permet d'éviter toute contamination du fluide au cours du remplissage. De plus, cela permet un nettoyage parfait du circuit de distribution de fluide, si bien que ces vannes se révèlent particulièrement adaptées au remplissage de liquides alimentaires.

## Revendications

1. Dispositif de commande d'un débit de fluide, du type comportant des premiers moyens de vannage (20, 22, 34) qui sont pourvus d'un seuil (22) au travers duquel circule le fluide, et d'un obturateur mobile (34) qui se déplace dans la chambre (16) entre une position d'appui, dans laquelle il est en appui sur le siège (22) pour interrompre le passage de fluide au travers du seuil (20), et une position d'ouverture dans laquelle l'obturateur (34) est écarté de son siège (22) pour autoriser le passage du fluide au travers du seuil,
**caractérisé en ce que** le dispositif comporte des seconds moyens de vannage qui sont interposés dans le circuit en série avec les premiers moyens de vannage (20, 22, 34), et dans lesquels un second obturateur mobile (38) se déplace entre une position d'appui, dans laquelle il est en appui sur le siège (32) d'un second seuil (30), et une position d'ouverture dans laquelle le second obturateur (38) est écarté du second siège (32) pour autoriser le passage du fluide au travers du second seuil (30), et **en ce que** le siège (32) des seconds moyens de vannage est ajouré de manière à laisser subsister une section de passage réduite pour le fluide lorsque l'obturateur (38) est en position d'appui, de sorte que, en position d'appui, le second obturateur (38) autorise le passage d'un débit réduit de fluide au travers du second seuil (30).

2. Dispositif selon la revendication 1, **caractérisé en ce que** l'un au moins des deux obturateurs (34, 38) se déplace entre sa position d'appui et sa position d'ouverture sous l'effet d'un champ magnétique.

3. Dispositif selon l'une quelconque des revendications précédentes, **caractérisé en ce que** l'obturateur (34, 38) se déplace verticalement entre sa position d'appui et sa position d'ouverture.

4. Dispositif selon les revendication 2 et 3 prises en combinaison, **caractérisé en ce que** la position d'appui de l'obturateur (34, 38) correspond à sa position basse, **en ce qu'**il est appelé et maintenu vers sa position haute d'ouverture par un électroaimant (36, 42), et **en ce qu'**il regagne sa position d'appui sous l'action de son poids.

5. Dispositif selon les revendication 2 et 3 prises en combinaison, **caractérisé en ce que** la position d'appui de l'obturateur (34, 38) correspond à sa position haute, **en ce qu'**il est appelé et maintenu vers sa position basse d'ouverture par un électroaimant (36, 42), et **en ce qu'**il regagne et est maintenu dans sa position d'appui sous l'action d'un aimant permanent (46, 48).

6. Dispositif selon l'une quelconque des revendications précédentes, **caractérisé en ce que** le fluide s'écoule dans le circuit dans le sens du déplacement de l'obturateur (34, 38) de sa position d'ouverture vers sa position d'appui.

7. Dispositif selon l'une quelconque des revendications précédentes prise en combinaison avec la revendication 2, **caractérisé en ce que** l'obturateur est réalisé sous la forme d'une bille (34, 38) en matériau magnétique

8. Dispositif selon l'une quelconque des revendications précédentes, **caractérisé en ce que** les deux moyens de vannage sont agencés au sein d'un même corps de vanne (10).

9. Machine de remplissage de récipients, **caractérisée en ce qu'**elle comporte au moins un dispositif de commande d'un débit de fluide conforme à l'une quelconque des revendications précédentes.

## Claims

1. Device for controlling a flow of fluid, of the type comprising first valve means (20, 22, 34) which are provided with a weir (22) through which the fluid flows, and with a moveable shutter (34) which moves in the chamber (16) between a bearing position, in which it bears against the seat (22) to interrupt the passage of fluid through the weir (20) and an open position in which the shutter (34) is away from its seat (22) to allow the fluid to pass through the weir,
**characterized in that** the device comprises second valve means which are interposed in the circuit in series with the first valve means (20, 22, 24) and in which a second moveable shutter (38) moves between a bearing position in which it bears against the seat (32) of a second weir (30) and an open position in which the second shutter (38) is away from the second seat (32) to allow the fluid to pass through the second weir (30), and **in that** the seat (32) of the second valve means is holed in such a way as to leave a small cross-section passage for the fluid when the shutter (38) is in the bearing position so that, in the bearing position, the second shutter (38) allows a small flow of fluid to pass through the second weir (30).

2. Device according to Claim 1, **characterized in that** at least one of the two shutters (34, 38) moves between its bearing position and its open position under the effect of a magnetic field.

3. Device according to any one of the preceding claims, **characterized in that** the shutter (34, 38) moves vertically between its bearing position and its open position.

4. Device according to Claims 2 and 3 taken in combination, **characterized in that** the bearing position of the shutter (34, 38) corresponds to its lowered position, **in that** it is attracted towards and held in its raised open position by an electromagnet (36, 42), and **in that** it returns to its bearing position under the action of its own weight.

5. Device according to Claims 2 and 3 taken in combination, **characterized in that** the bearing position of the shutter (34, 38) corresponds to its raised position, **in that** it is attracted towards and held in its lowered open position by an electromagnet (36, 42), and **in that** it returns to and is held in its bearing position under the action of a permanent magnet (46, 48).

6. Device according to any one of the preceding claims, **characterized in that** the fluid flows in the circuit in the direction of travel of the shutter (34, 38) from its open position to its bearing position.

7. Device according to any one of the preceding claims taken in combination with Claim 2, **characterized in that** the shutter is made in the form of a ball (34, 38) of magnetic material.

8. Device according to any one of the preceding claims, **characterized in that** the two valve means are positioned within one and the same valve body (10).

9. Machine for filling containers, **characterized in that** it comprises at least one device for controlling a flow of fluid according to any one of the preceding claims.

## Patentansprüche

1. Vorrichtung zur Steuerung einer Fluidmenge, umfassend erste Ventilmittel (20, 22, 34), die mit einer Schwelle (22), durch die das Fluid zirkuliert, und mit einem beweglichen Verschlusselement (34) versehen sind, das sich in der Kammer (16) zwischen einer Stützposition, in der es auf dem Sitz (22) abgestützt ist, um den Fluiddurchgang durch die Schwelle (20) zu unterbrechen, und einer Öffnungsposition verschiebt, in der das Verschlusselement (34) von seinem Sitz (22) entfernt ist, um den Durchgang des Fluids durch die Schwelle zu gestatten,
**dadurch gekennzeichnet, dass** die Vorrichtung zweite Ventilmittel umfasst, die in die Schaltung in Serie mit den ersten Ventilmitteln (20, 22, 34) eingesetzt sind, und bei denen sich ein zweites bewegliches Verschlusselement (38) zwischen einer Stützposition, in der es auf dem Sitz (32) einer zweiten Schwelle (30) abgestützt ist, und einer Öffnungsposition verschiebt, in der das zweite Verschlusselement (38) von dem zweiten Sitz (32) entfernt ist, um den Durchgang des Fluids durch die zweite Schwelle (30) zu gestatten, und dass der Sitz (32) der zweiten Ventilmittel gelocht ist, um einen verringerten Durchgangsquerschnitt für das Fluid bestehen zu lassen, wenn sich das Verschlusselement (38) in Stützposition befindet, so dass in der Stützposition das zweite Verschlusselement (38) den Durchgang einer verringerten Fluidmenge durch die zweite Schwelle (30) gestattet.

2. Vorrichtung nach Anspruch 1, **dadurch gekennzeichnet, dass** sich mindestens eines der beiden Verschlusselemente (34, 38) zwischen seiner Stützposition und seiner Öffnungsposition unter der Wirkung eines Magnetfeldes verschiebt.

3. Vorrichtung nach einem der vorhergehenden Ansprüche, **dadurch gekennzeichnet, dass** sich das Verschlusselement (34, 38) vertikal zwischen seiner Stützposition und seiner Öffnungsposition verschiebt.

4. Vorrichtung nach den Ansprüchen 2 und 3 in Kombination, **dadurch gekennzeichnet, dass** die Stützposition des Verschlusselements (34, 38) seiner unteren Position entspricht, dass es in seine obere Öffnungsposition durch einen Elektromagneten (36, 42) gebracht und in dieser gehalten wird, und dass es seine Stützposition unter der Wirkung seines Gewichts wieder erreicht.

5. Vorrichtung nach den Ansprüchen 2 und 3 in Kombination, **dadurch gekennzeichnet, dass** die Stützposition des Verschlusselements (34, 38) seiner oberen Position entspricht, dass es in seine untere Öffnungsposition durch einen Elektromagneten (36, 42) gebracht und in dieser gehalten wird, und dass es seine Stützposition unter der Wirkung eines Dauermagneten (46, 48) wieder erreicht und in dieser gehalten wird.

6. Vorrichtung nach einem der vorhergehenden Ansprüche, **dadurch gekennzeichnet, dass** das Fluid in der Schaltung in Richtung der Verschiebung des Verschlusselements (34, 38) von seiner Öffnungsposition zu seiner Stützposition abfließt.

7. Vorrichtung nach einem der vorhergehenden Ansprüche in Kombination mit Anspruch 2, **dadurch gekennzeichnet, dass** das Verschlusselement in Form einer Kugel (34, 38) aus einem magnetischen Material ausgeführt ist.

8. Vorrichtung nach einem der vorhergehenden Ansprüche, **dadurch gekennzeichnet, dass** die beiden Ventilmittel innerhalb eines selben Ventilkörpers (10) angeordnet sind.

9. Maschine zum Befüllen von Behältern, **dadurch gekennzeichnet, dass** sie mindestens eine Vorrichtung zur Steuerung einer Fluidmenge nach einem der vorhergehenden Ansprüche umfasst.
